# EUROPEAN PATENT APPLICATION

(11) **EP 3 785 841 A1**
(43) Date of publication of application: **03.03.2021**
(21) Application number: 20156812.8
(22) Date of filing: 12.02.2020
(51) Int. Cl.: B23K 26/142, B23K 26/14, B23K 26/16, B23K 26/38, B23K 103/16

(54) **LASER PROCESSING DEVICE**

(30) Priority: 30.08.2019 JP 2019158181
(71) Applicant: Mitsubishi Heavy Industries, Ltd., Chiyoda-ku Tokyo 100-8332 (JP)
(72) Inventor: YOSHIDA, Kazuhiro, Tokyo, 100-8332 (JP); KOMATSU, Yoshinao, Tokyo, 100-8332 (JP); GOYA, Saneyuki, Tokyo, 100-8332 (JP); INOUE, Akiko, Tokyo, 100-8332 (JP); FUJIYA, Yasuyuki, Tokyo, 100-8332 (JP); NARITA, Ryuichi, Tokyo, 100-8332 (JP)
(74) Representative: Henkel & Partner mbB

(57) **Abstract**

A laser processing device of the present invention includes a laser radiation unit which is configured to perform laser processing on a workpiece while scanning a work surface from an end portion of the workpiece to form a processing groove of which one end is open at the end portion of the workpiece and the other end is closed; and a nozzle unit which is configured to inject a gas along the surface of the workpiece such that a flow velocity thereof increases from the one end of the processing groove toward the other end.

## Description

### BACKGROUND OF THE INVENTION

### Field of the Invention

The present disclosure relates to a laser processing device.

### Description of Related Art

For cutting a metal material, for example, a device using radiation of a laser beam is used (for example, Patent Document 1 below). Such a laser processing device has a light source and a galvano mirror that reflects a laser generated by the light source. By changing a posture of the galvano mirror, an irradiation range of the laser beam can be moved. That is, by moving (scanning) the laser on a surface of a workpiece, thermal energy of the laser beam is transmitted to the workpiece, so that the workpiece can be subjected to cutting processing.

Here, it is known that a plume is generated when performing the laser processing mentioned above. When a plume occurs, a cut surface (a processing groove) of a workpiece is exposed to a high temperature of the plume and is denatured, and a heat-affected layer may be formed on the cut surface. Further, processing may be performed on carbon fiber reinforced plastic (CFRP) using the laser processing device mentioned above. When the laser processing is performed on CFRP, a resin component is dropped or carbonized, thereby forming a heat-affected layer. In the case of applying CFRP to a product, it is common to remove the heat-affected layer.

Patent Document 1: Japanese Unexamined Patent Application, First Publication No. 2011-36865

### SUMMARY OF THE INVENTION

However, in the conventional laser processing device, there has been a problem in that, due to the generated plume, processing accuracy of a product is lowered and the number of steps for removing the heat-affected layer from a workpiece is increased.

The present disclosure has been made to solve the above problems, and an object thereof is to provide a laser processing device in which formation of a heat-affected layer can be further inhibited.

In order to solve the above problems, a laser processing device according to the present disclosure includes a laser radiation unit which is configured to perform laser processing on a workpiece while scanning a work surface from an end portion of the workpiece to form a processing groove of which one end is open at the end portion of the workpiece and the other end is closed, and a nozzle unit which is configured to inject a gas along the surface of the workpiece such that a flow velocity thereof increases from the one end of the processing groove toward the other end.

According to the laser processing device of the present disclosure, formation of a heat-affected layer can be further inhibited.

### BRIEF DESCRIPTION OF THE DRAWINGS

FIG. 1 is a side view showing a configuration of a laser processing device according to a first embodiment of the present disclosure.
FIG. 2 is a plan view of a workpiece and the laser processing device according to the first embodiment of the present disclosure.
FIG. 3 is a cross-sectional view showing a configuration of a gas nozzle according to the first embodiment of the present disclosure.
FIG. 4 is an enlarged cross-sectional view of the workpiece according to the first embodiment of the present disclosure, and is an explanatory diagram showing a behavior of a gas flowing inside a processing groove.
FIG. 5 is a cross-sectional view showing a modified example of the gas nozzle according to the first embodiment of the present disclosure.
FIG. 6 is a cross-sectional view showing another modified example of the gas nozzle according to the first embodiment of the present disclosure.
FIG. 7 is a side view showing a configuration of a laser processing device according to a second embodiment of the present disclosure.

### DETAILED DESCRIPTION OF THE INVENTION

### <First embodiment>

### (Configuration of laser processing device)

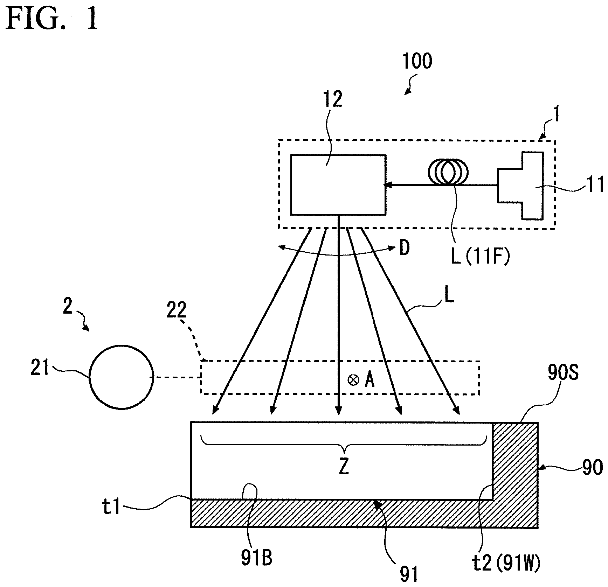

Hereinafter, a laser processing device 100 according to a first embodiment of the present disclosure will be described with reference to FIGS. 1 to 4. The laser processing device 100 according to the present embodiment is a device for performing laser processing including cutting processing and drilling processing, for example, by radiating a laser to a workpiece 90 made of carbon fiber reinforced plastic (CFRP), a resin, or a metal. As shown in FIG. 1, the laser processing device 100 includes a laser radiation unit 1 and a nozzle unit 2.

The laser radiation unit 1 radiates laser beam L toward a surface of the workpiece 90 (a work surface 90S). The laser radiation unit 1 includes a light source 11, an optical fiber 11F, and a galvano scanner 12. The light source 11 generates, for example, fiber laser light and YAG laser light. The galvano scanner 12 is disposed in a traveling direction of the laser beam L. Although not shown in detail, the galvano scanner 12 has a galvano mirror therein. The galvano mirror reflects the laser beam L radiated from the light source 11. The galvano mirror can change its posture on the basis of a command input from an external control device (not shown). Thus, the galvano mirror scans the laser beam L on the work surface 90S. A laser head including the galvano scanner 12 is disposed above the work surface 90S.

In the present embodiment, as shown by an arrow D in FIG. 1, the laser beam L reciprocates (scans) linearly or curvedly on the work surface 90S. Also, the laser beam L may not reciprocate but be radiated only from one side toward the other side. By radiating and reciprocating the laser beam L in this manner, a processing groove 91 is formed on the work surface 90S. A bottom surface of the processing groove 91 (a groove bottom surface 91B which will be described later) is set as an irradiation range Z of the laser beam L. In other words, the irradiation range Z is a scanning region of the laser beam L near the work surface 90S. Cutting processing (laser processing) is performed on the workpiece 90 within the irradiation range Z using thermal energy of the laser beam L. In the processing groove 91, one end (an end portion t1) thereof opens at an end portion of the workpiece 90 in a horizontal direction, and an end surface (a groove end surface 91W) thereof on the other end (an end portion t2) side and the bottom surface (groove bottom surface 91B) are closed. That is, the cutting processing proceeds from the end portion t1 side, which is an end surface of the workpiece 90, to the end portion t2 side serving as a groove corner portion.

The nozzle unit 2 is provided for injecting a gas (for example, air) toward the irradiation range Z described above. The nozzle unit 2 has a compressor 21 and a gas nozzle 22. The compressor 21 compresses air taken in from the outside to generate high-pressure air. This high-pressure air is supplied as a jet A to the irradiation range Z on the work surface 90S through the gas nozzle 22. Also, as the aforementioned gas, in addition to air, nitrogen, a rare gas, or the like can be suitably used.

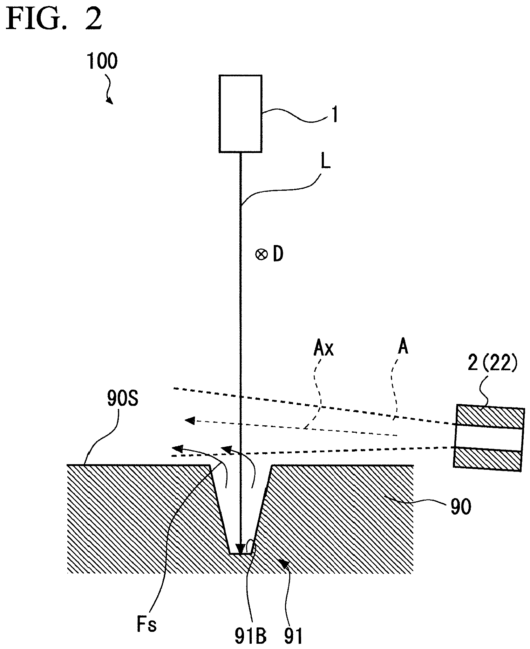

As shown in FIG. 1 or FIG. 2, in the present embodiment, the gas nozzle 22 is provided at a position which is separated slightly upward from the work surface 90S and is adjacent to the processing groove 91 in a direction orthogonal to the scanning direction D. That is, the gas nozzle 22 supplies the jet A in the direction orthogonal to the scanning direction D to pass through an upper end portion of the processing groove 91 along the work surface 90S. As shown in FIG. 2, a posture of the gas nozzle 22 (that is, an angle that a flowing direction Ax forms with the work surface 90S) is set such that, with the work surface 90S as a reference, the flowing direction Ax of the jet A gradually moves away from the work surface 90S from an upstream side toward a downstream side in the flowing direction Ax. Further, "flowing direction Ax" herein refers to a center line along which the gas nozzle 22 extends. Therefore, while the jet A flows along the work surface 90S, it does not flow into the processing groove 91 or flows thereinto only very slightly. As an example, when a spread angle of the jet A when injected from the gas nozzle 22 is 10 degrees, the gas nozzle 22 is disposed such that the flowing direction Ax is 5 degrees with respect to the work surface 90S. In other words, the posture of the gas nozzle 22 is set such that the flowing direction Ax is equal to half the spread angle of the jet A.

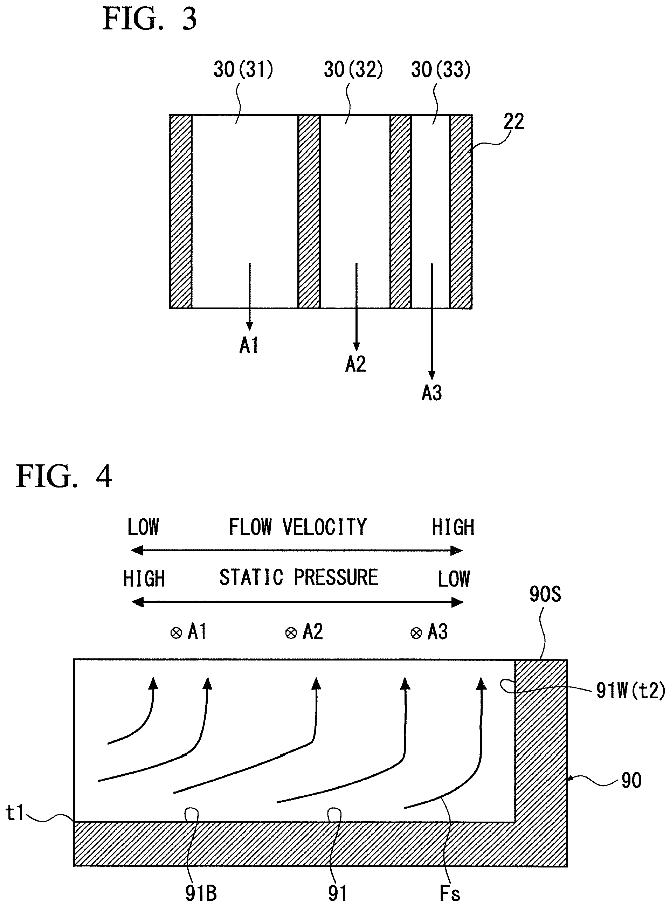

Further, as shown in FIG. 3, the gas nozzle 22 has a plurality of opening portions 30 as flow paths through which high-pressure air flows. In the example of FIG. 3, three opening portions 30 (a first opening portion 31, a second opening portion 32, and a third opening portion 33) are formed. Also, the number of opening portions 30 may be four or more. The first opening portion 31, the second opening portion 32, and the third opening portion 33 are arranged in a direction in which the processing groove 91 extends (a direction from the end portion t1 toward the end portion t2). The first opening portion 31 has a larger opening area (flow path cross-sectional area) than the second opening portion 32. The second opening portion 32 has a larger opening area (flow path cross-sectional area) than the third opening portion 33. Therefore, a flow velocity of the injected air increases from the first opening portion 31 toward the third opening portion 33. Further, cross-sectional shapes of the opening portions 30 can be appropriately set as a rectangle, a polygon, a circle, or the like in accordance with a design or a specification.

With the above configuration, as shown in FIG. 4, the jet A (a jet A3) supplied to the other end side (end portion t2 side) of the processing groove 91 has a larger flow velocity than jets A1 and A2 on the one end side (end portion t1 side) with respect to the jet A3. In other words, a flow velocity distribution increases from the one end of the processing groove 91 toward the other end. Therefore, on the work surface 90S, a static pressure is lower in a region in which the flow velocity is relatively high, and the static pressure is higher in a region in which the flow velocity is relatively low.

### (Operations and effects)

Next, operations of the laser processing device 100 according to the present embodiment will be described. When the laser processing device 100 is operated, the laser beam L is transmitted to the galvano scanner 12 through the light source 11 and the optical fiber F. At the same time, the compressor 21 is driven to inject high-pressure air from the gas nozzle 22. The laser beam L is radiated to the aforementioned irradiation range Z via the galvano scanner 12. The processing groove 91 is formed in the workpiece 90 due to the radiation of the laser beam L. Specifically, laser processing is performed from the end portion t1 side of the workpiece 90 toward the end portion t2 side. Further, a depth of the processing groove 91 gradually increases as the scanning of the laser beam L is repeated.

Here, when the laser processing described above is performed on the workpiece 90 made of CFRP, a plume is generated. When the plume is generated, a cut surface (the processing groove 91) of the workpiece may be exposed to a high temperature of the plume and denatured, and a heat-affected layer may be formed on the cut surface. When laser processing is performed on CFRP, a resin component is eliminated or decomposed and therefore a heat-affected layer is formed. The heat-affected layer is unnecessary for ensuring quality of a product. Therefore, a technique for inhibiting formation of the heat-affected layer has been desired.

Therefore, the laser processing device 100 according to the present embodiment employs a configuration in which the jet A is supplied from the nozzle unit 2 along the work surface 90S as described above, thereby sucking the plume out of the processing groove 91. More specifically, the jet A supplied from the nozzle unit 2 passes above the processing groove 91 along the work surface 90S. As a result, a pressure (static pressure) on the work surface 90S becomes lower than a pressure outside the end portion t1 of the processing groove 91. Accordingly, a flow of air (a suction flow Fs) flowing from the open end portion t1 side into the processing groove 91 is formed. After passing through the processing groove 91, the suction flow Fs flows out of an upper opening to the outside and joins the jet A. Through this process, the plume in the processing groove 91 can be sucked out.

Further, in the above configuration, the flow velocity of the jet A supplied from the nozzle unit 2 increases from the one end (end portion t1) side toward the other end (end portion t2) side of the processing groove 91. Thus, the static pressure on the work surface 90S becomes lower on the end portion t2 side than on the end portion t1 side. Since the static pressure on the work surface 90S decreases toward the end portion t2 side in this way, the flow velocity of the suction flow Fs becomes higher on the end portion t2 side than on the end portion t1 side. That is, the suction flow Fs flowing from the processing groove 91 to the outside can be stably formed also on the end portion t2 side which is a position separated from the end portion t1 that is an open end. As a result, the plume existing in the processing groove 91 moves with the suction flow Fs and is sucked out. Therefore, a possibility of the heat-affected layer mentioned above being formed in the processing groove 91 can be reduced.

Also, according to the above configuration, the gas is supplied in a direction intersecting the scanning direction D, that is, a direction intersecting the direction in which the processing groove 91 extends. Thus, air can be positively sucked from the inside of the processing groove 91 toward the outside. As a result, the plume can move with the flow of air and can be efficiently discharged to the outside.

Further, according to the above configuration, the opening areas of the plurality of opening portions 30 gradually decrease from the one end toward the other end. Therefore, the flow velocity of the jet A injected from the opening portions 30 becomes higher toward the opening portions 30 on the other end side. Thus, the flow of air from the processing groove 91 toward the outside can be stably formed even at a position (a position on the other end side) separated from the end portion (one end) of the processing groove 91.

In addition, according to the above configuration, the gas injected from the nozzle unit 2 gradually flows away from the surface 90S of the workpiece 90 from the upstream side toward the downstream side. Thus, a possibility of the gas flowing into the processing groove 91 is reduced. As a result, the flow of the gas flowing from the processing groove 91 toward the outside can be more stably formed. On the other hand, when the gas supplied from the nozzle unit 2 flows into the processing groove 91, the flow of the gas stagnates in the processing groove 91 or forms a vortex. Accordingly, the flow of air from the inside of the processing groove 91 toward the outside may become unstable. However, according to the above configuration, this possibility can be reduced.

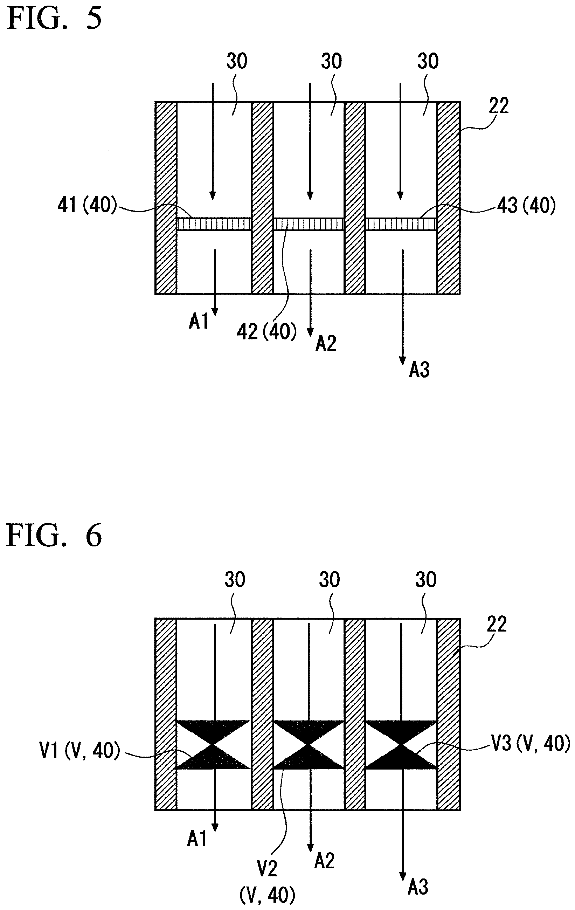

The first embodiment of the present disclosure has been described above. Also, various changes and modifications can be made to the above configuration without departing from the gist of the present disclosure. For example, a configuration in which the flow velocity is changed between the plurality of opening portions 30 by changing the opening area of the opening portions 30 in the gas nozzle 22 has been described in the first embodiment. However, the gas nozzle 22 can also be configured as shown in FIGS. 5 and 6. In the example of FIG. 5, the opening areas of the opening portions 30 are all the same, and a perforated plate 40 is provided as a resistive member in each of the opening portions 30. The perforated plate is a plate material in which a plurality of holes are formed. These resistive members 40 are configured such that aperture ratios thereof gradually increase from the end portion t1 side toward the end portion t2 side. In other words, the number of holes increases toward the resistive members 40 closer to the end portion t2 side. That is, the plurality of resistive members 40 are configured such that a resistance to the flow of the gas gradually decreases from the end portion t1 side toward the end portion t2 side. Therefore, the jet A2 passing through a second resistive member 42 has a larger flow velocity than the jet A1 passing through a first resistive member 41. Similarly, the jet A3 passing through a third resistive member 43 has a larger flow velocity than the jet A2 passing through the second resistive member 42.

According to the above configuration, the flow velocity of the gas can be easily adjusted simply by using the inexpensive perforated plate as the resistive member 40. This makes it possible to remove the plume more easily and at lower costs. Also, a wire mesh may be used as the resistive member 40 instead of the perforated plate. In this case, a magnitude of the resistance can be adjusted by changing a diameter of a wire and the number of wires constituting the wire mesh. Also, a configuration in which only one opening portion is formed in the gas nozzle 22 and a plurality of types of resistive members 40 having different resistances as described above are disposed in the opening portion, thereby forming a flow velocity distribution, can also be employed

In the example of FIG. 6, a valve V of which an opening degree can be adjusted is used as the resistive member 40. A third valve V3 on the end portion t2 side has a larger opening degree than a second valve V2 adjacent thereto. An opening degree of the second valve V2 is larger than that of a first valve V1 on the end portion t1 side. That is, the opening degrees of the valves V are configured to increase toward the end portion t2 side. Thus, the resistance to the flow of the gas becomes smaller toward the valves V closer to the end portion t2 side.

According to the above configuration, the flow velocity of the gas can be easily adjusted by using the valve V capable of adjusting the opening degree as the resistive member 40. This makes it possible to remove the plume more easily and at lower costs. Further, by changing the opening degree of the valve V, the flow velocity distribution of the gas can be adjusted more precisely.

### <Second embodiment>

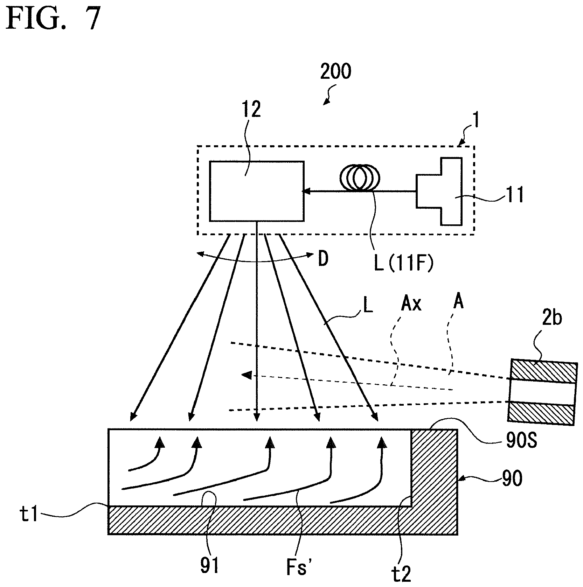

Next, a second embodiment of the present disclosure will be described with reference to FIG. 7. Also, the same components as those in the first embodiment are denoted by the same reference signs, and detailed description thereof will be omitted. As shown in FIG. 7, an arrangement of a nozzle unit 2b in a laser processing device 200 according to the present embodiment is different from that in the first embodiment. Specifically, the nozzle unit 2b supplies the jet A from the other end (end portion t2) side of the processing groove 91 toward the one end (end portion t1) side that is the open end. That is, in the direction in which the processing groove 91 extends, the nozzle unit 2b supplies the jet A from the end portion t2 side that is a groove corner portion toward the end portion t1 side that is the open end.

The jet A is configured to flow along the work surface 90S as in the first embodiment. Further, the flowing direction Ax gradually extends away from the work surface 90S from the end portion t2 side that is an upstream side toward the end portion side t1 that is a downstream side. An angle formed by the flowing direction Ax with respect to the work surface 90S is the same as in the first embodiment.

According to the above configuration, the nozzle unit 2 injects the gas in a direction from the other end of the processing groove 91 to the one end. In this case, the flow velocity of the gas along the work surface 90S becomes larger on the other end side that is the upstream side. Therefore, the static pressure on the work surface 90S is lower on the other end side than on the one end side. Thus, the outside air that has flowed into the processing groove 91 from the open one end (end portion t1) side flows upward as it goes from the one end (end portion t1) toward the other end (end portion t2). At this time, since the static pressure on the work surface 90S decreases toward the end portion t2 side, a stronger air flow (a suction flow Fs') is generated in the processing groove 91 on the end portion t2 side than on the end portion t1 side. As a result, the plume existing in the processing groove 91 moves along with the flow of air and is sucked out. Therefore, a possibility of the heat-affected layer being formed in the processing groove 91 can be reduced.

Further, according to the above configuration, simply by disposing the nozzle unit 2b on a groove corner side of the processing groove 91, a difference in velocity (a flow velocity distribution) can be caused in the flow of air (suction flow Fs') formed in the processing groove 91. In other words, in the formation of the flow velocity distribution, a shape and a structure of the nozzle unit 2b itself can be simplified. This makes it possible to further reduce manufacturing costs and maintenance costs of the laser processing device 200.

Also, according to the above configuration, the gas injected from the nozzle unit 2b gradually flows away from the surface 90S of the workpiece 90 from the upstream side toward the downstream side. Specifically, the posture of the gas nozzle 22 (that is, the angle formed by the flowing direction Ax with respect to the work surface 90S) is set such that, with the work surface 90S as a reference, the flowing direction Ax of the jet A gradually moves away from the work surface 90S from the upstream side to the downstream side in the flowing direction Ax. Also, "flowing direction Ax" herein refers to the center line along which the gas nozzle 22 extends. Thus, a possibility of the gas flowing into the processing groove 91 is reduced. As a result, the flow of the gas flowing from the processing groove 91 toward the outside can be more stably formed. On the other hand, when the gas supplied from the nozzle unit 2 flows into the processing groove 91, the flow of the gas stagnates in the processing groove 91 or forms a vortex. Thus, the flow of air from the inside of the processing groove 91 toward the outside may become unstable. However, according to the above configuration, this possibility can be reduced.

Although embodiments of the present disclosure have been described above in detail with reference to the drawings, a specific configuration thereof is not limited to these embodiments, but includes modifications of the design or the like that do not depart from the gist of the present disclosure.

### <Appendix>

The laser processing device 100 described in each embodiment may be understood as follows, for example.

(1) A laser processing device 100 according to a first aspect comprises the laser radiation unit 1 which is configured to perform laser processing on the workpiece 90 while scanning the work surface 90S from the end portion t1 of the workpiece 90 to form the processing groove 91 in which the one end is open at the end portion t1 of the workpiece 90 and the other end is closed, and the nozzle unit 2 which is configured to inject the gas along the surface 90S of the workpiece 90 such that the flow velocity thereof increases from the one end of the processing groove 91 toward the other end.

According to the above configuration, the jet A supplied from the nozzle unit 2 passes above the processing groove 91 along the work surface 90S. Thus, the pressure (static pressure) on the work surface 90S becomes lower than the pressure outside the end portion t1 in the processing groove 91. Accordingly, the flow of air (suction flow Fs) flowing into the processing groove 91 from the open end portion t1 side is formed. After passing through the processing groove 91, the suction flow Fs flows out of the upper opening to the outside and joins the jet A. Through this process, the plume in the processing groove 91 can be sucked out.

Further, according to the above configuration, the flow velocity of the jet A supplied from the nozzle unit 2 increases from the one end (end portion t1) side toward the other end (end portion t2) side of the processing groove 91. Thus, the static pressure on the work surface 90S becomes lower on the end portion t2 side than on the end portion t1 side. Since the static pressure on the work surface 90S decreases toward the end portion t2 side in this way, the flow velocity of the suction flow Fs becomes higher on the end portion t2 side than on the end portion t1 side. That is, the suction flow Fs from the processing groove 91 toward the outside can be stably formed also on the end portion t2 side which is a position separated from the end portion t1 that is the open end. As a result, the plume existing in the processing groove 91 moves along with the suction flow Fs and is sucked out. Therefore, a possibility of the heat-affected layer mentioned above being formed in the processing groove 91 can be reduced.

(2) In a laser processing device 100 according to a second aspect, the nozzle unit 2 is configured to inject the gas in a direction intersecting the scanning direction D of the laser radiation unit 1.

According to the above configuration, the gas is supplied in the direction intersecting the scanning direction D, that is, the direction intersecting a direction in which the processing groove 91 extends. Thus, air can be positively sucked out from the inside of the processing groove 91 toward the outside. As a result, the plume can move along with the flow of air and can be efficiently discharged to the outside.

(3) In a laser processing device 100 according to a third aspect, the nozzle unit 2 has the gas nozzle 22 in which the plurality of opening portions 30 are formed adjacent to each other from the one end to the other end, and the opening areas of the plurality of opening portions 30 are configured to gradually decrease from the one end toward the other end.

According to the above configuration, the opening areas of the plurality of opening portions 30 are configured to gradually decrease from one end to the other end. Therefore, the flow velocity of the jet A injected from the opening portions 30 increases toward the opening portions 30 on the other end side. Thus, the flow of air from the processing groove 91 toward the outside can be stably formed even at a position (a position on the other end side) away from the end portion (one end) of the processing groove 91.

(4) In a laser processing device 100 according to a fourth aspect, the nozzle unit 2 has the plurality of resistive members 40 which are provided adjacent to each other from the one end to the other end and generate resistance to the flow of the gas, and the resistance in the plurality of resistive members 40 is configured to gradually decrease from the one end to the other end.

According to the above configuration, the resistance generated by the plurality of resistive members 40 is configured to gradually decrease from the one end to the other end. Therefore, the flow velocity of the jet A injected from the opening portions 30 increases toward the opening portions 30 on the other end side. Thus, the flow of air from the processing groove 91 toward the outside can be stably formed even at a position (a position on the other end side) away from the end portion (one end) of the processing groove 91.

(5) In a laser processing device 100 according to a fifth aspect, each resistive member is a perforated plate in which a plurality of holes are formed, and an aperture ratio of the perforated plate is configured to gradually increase from the one end to the other end.

According to the above configuration, the flow velocity of the jet A flowing out of the opening portions 30 can be adjusted simply by using the inexpensive perforated plate as the resistive member 40 and changing the aperture ratio. Thus, manufacturing costs and maintenance costs of the device can be reduced.

(6) In a laser processing device 100 according to a sixth aspect, the resistive member 40 is a valve V of which an opening degree can be adjusted, and the opening degree of the valve V is configured to increase from the one end to the other end.

According to the above configuration, the flow velocity of the jet A flowing out of the opening portions 30 can be adjusted by using the valve of which the opening degree can be adjusted as the resistive member 40 and changing the opening degree. Thus, the flow velocity distribution of the jet A injected from each opening portion 30 can be adjusted more precisely.

(7) In a laser processing device 200 according to a seventh aspect, the nozzle unit 2b is configured to inject the gas in a direction from the other end of the processing groove 91 toward the one end.

According to the above configuration, the nozzle unit 2b injects the gas in the direction from the other end of the processing groove 91 toward the one end. In this case, the flow velocity of the gas along the work surface 90S becomes larger on the other end side that is the upstream side. Therefore, the static pressure on the work surface 90S becomes lower on the other end side than on the one end side. Thus, the outside air that has flowed into the processing groove 91 from the open one end (end portion t1) side flows upward as it goes from the other end (end portion t2) toward the one end (end portion t1). At this time, since the static pressure on the work surface 90S decreases toward the end portion t2 side, a stronger flow of air (suction flow Fs') is generated in the processing groove 91 on the end portion t2 side than on the end portion t1 side. As a result, the plume existing in the processing groove 91 moves along with the flow of air and is sucked out. Therefore, a possibility of the heat-affected layer mentioned above being formed in the processing groove 91 can be reduced.

Further, according to the above configuration, a difference in velocity (flow velocity distribution) can be caused in the flow of air formed in the processing groove 91 simply by disposing the nozzle unit 2b on the groove corner side (the other end side) of the processing groove 91. In other words, as for the formation of the flow velocity distribution, a shape and a structure of the nozzle unit 2b itself can be simplified. This makes it possible to further reduce manufacturing costs and maintenance costs of the laser processing device 200.

(8) In a laser processing device 100 according to an eighth aspect, the center line (flowing direction Ax) of the nozzle unit 2 gradually extends away from the surface 90S of the workpiece 90 from the upstream side toward the downstream side, with the surface 90S as a reference.

According to the above configuration, the gas injected from the nozzle unit 2 gradually flows away from the surface 90S of the workpiece 90 from the upstream side toward the downstream side. Specifically, the posture of the gas nozzle 22 (that is, the angle formed by the flowing direction Ax with respect to the work surface 90S) is set such that, with the work surface 90S as a reference, the flowing direction Ax of the jet A gradually moves away from the work surface 90S from the upstream side toward the downstream side in the flowing direction Ax. Also, "flowing direction Ax" herein refers to the center line along which the gas nozzle 22 extends. Thus, a possibility of the gas flowing into the processing groove 91 is reduced. As a result, the flow of the gas flowing from the processing groove 91 to the outside can be more stably formed. On the other hand, when the gas supplied from the nozzle unit 2 flows into the processing groove 91, the flow of the gas stays in the processing groove 91 or forms a vortex. Thus, the flow of air from the inside of the processing groove 91 toward the outside may become unstable. However, according to the above configuration, this possibility can be reduced.

### EXPLANATION OF REFERENCES

100,200 Laser processing device
1 Laser radiation unit
2,2b Nozzle unit
11 Light source
11F Optical fiber
12 Galvano scanner
21 Compressor
40 Resistive member
41 First resistive member
42 Second resistive member
43 Third resistive member
90 Workpiece
90S Work surface
91 Processing groove
91B Groove bottom surface
91W Groove end surface (groove corner portion)
A, A1, A2, A3 Jet
Fs, Fs' Suction flow
L Laser beam
t1, t2 End portion
V Valve
V1 First valve
V2 Second valve
V3 Third valve
Z Irradiation range

## Claims

1. A laser processing device comprising:
a laser radiation unit which is configure to perform laser processing on a workpiece while scanning a work surface from an end portion of the workpiece to form a processing groove of which one end is open at the end portion of the workpiece and the other end is closed; and
a nozzle unit which is configured to inject a gas along the surface of the workpiece such that a flow velocity thereof increases from the one end of the processing groove toward the other end.

2. The laser processing device according to claim 1, wherein the nozzle unit is configured to inject the gas in a direction intersecting the scanning direction of the laser radiation unit.

3. The laser processing device according to claim 1 or 2,
wherein the nozzle unit has a gas nozzle in which a plurality of opening portions are formed adjacent to each other from the one end to the other end, and
opening areas of the plurality of opening portions are configured to gradually decrease from the one end toward the other end.

4. The laser processing device according to any one of claims 1 to 3,
wherein the nozzle unit has a plurality of resistive members which are provided adjacent to each other from the one end to the other end and generate resistance to a flow of the gas, and
the plurality of resistive members are configured such that the resistance gradually decreases from the one end toward the other end.

5. The laser processing device according to claim 4, wherein each resistive member is a perforated plate in which a plurality of holes are formed and is configured such that an aperture ratio of the perforated plate gradually increases from one end toward the other end.

6. The laser processing device according to claim 4, wherein each resistive member is a valve of which an opening degree can be adjusted and is configured such that the opening degree of the valve increases from one end toward the other end.

7. The laser processing device according to claim 1, wherein the nozzle unit is configured to inject the gas in a direction from the other end of the processing groove toward the one end.

8. The laser processing device according to any one of claims 1 to 7, wherein a center line of the nozzle unit gradually extends away from the surface from an upstream side toward a downstream side, with the surface of the workpiece as a reference.
